# EUROPEAN PATENT SPECIFICATION

(11) **EP 1 501 720 B1**
(45) Date of publication and mention of the grant of the patent: **20.09.2006**
(21) Application number: 03723522.3
(22) Date of filing: 05.05.2003
(51) Int. Cl.: B63B 1/38

(54) **VESSEL WITH A BOTTOM AIR CAVITY HAVING AN AIR DEFLECTOR**
SCHIFF MIT EINEM AM BODEN ANGEORDNETEN LUFTHOHLRAUM MIT EINEM LUFTDEFLEKTOR
NAVIRE COMPORTANT UNE CAVITE D'AIR DE FOND PRESENTANT UN DEFLECTEUR D'AIR

(30) Priority: 07.05.2002 EP 02076818
(43) Date of publication of application: 02.02.2005
(73) Proprietor: DK Group N.A. N.V., Curaçao (AN)
(72) Inventor: MATVEEV, Konstantin, Pasadena, CA 91106 (US); WINKLER, Jorn, Paul, NL-3012 NJ Rotterdam (NL)
(74) Representative: van Westenbrugge, Andries
(86) International application number: PCT/NL2003/000328
(87) International publication number: WO 2003/095298

(56) References cited:
- WO-A-82/00812
- GB-A- 237 817
- GB-A- 1 190 621
- NL-A- 9 301 476
- US-A- 4 509 927

## Description

The invention relates to an air cavity vessel comprising a hull with a bow, a stem, a propeller near the stem, at least one open cavity, which is formed at the bottom of the hull, and air injection means for supplying air into the cavity.

Such an air cavity vessel is known from US-A- 3,595,191 in which the bottom of the hull of a large ocean going vessel, such as an oil tanker, is provided with a number of downwardly opening air cavities into which compressed air is introduced. Hereby the water contact surface of the vessel is reduced and its hydrodynamic properties are improved, such as for instance a reduction of water resistance. When sailing, air escapes from the pockets as the vessel pitches and rolls. Also in calm waters, air will escape from the air cavities. The vessel is propelled by a submerged propeller, which is adversely affected by air reaching the propeller from the cavities, which reduces lift on the propeller blades, leading to thrust and torque fluctuations, or thrust breakdown (propeller racing). One solution to the problem of air reaching the propeller is the use of ventilated propellers or a "hydro air drive" such as described in US-A-5,505,639 (Burg patent). Such a ventilated propellers or "hydro air drives" are relatively complex. Furthermore, when an existing vessel is retrofitted with one or more air cavities, which are added to the hull, exchange of the propeller is an extensive and costly operation.

Another disclosure of an air cavity vessel is known from document NL 9301476, which includes the features of the preamble of claim 1.

It is therefore an object of the invention to provide an air cavity vessel in which the ingress of air into the propeller area is reduced.

Hereto an air cavity according to the present invention is characterised in that the vessel is provided with at least one air deflector, extending between the rearmost cavity and the propeller.

At the air deflector, which may for instance have a wedge-shaped cross section, or be formed by a curved surface, a low pressure area is formed, along which air bubbles are transversely guided form the bottom of the hull, along the sides of the vessel to the water surface, without reaching the propeller. Hereby the propeller is effectively shielded from air escaping from the air cavities. A regular submerged, non-ventilated propeller can be used in conjunction with the air cavities, by use of the air deflector of the present invention, which forms an air barrier between the rearmost air cavity and the propeller. In this way, existing vessels, such as bulk carriers, can be retrofitted with one or more air cavities, which are welded to the bottom of the hull without having to resort to a redesign of the propeller.

In one embodiment the deflector extends in a transverse direction from a longitudinal centre line of the vessel to the sides of the vessel and has a sloping surface extending upwardly from the hull when going towards the stem. The air is guided along the low pressure side of the striplike air deflectors to the water surface without reaching the propeller.

In a further embodiment, two or more air deflectors extend in parallel for effective transverse air transport from the hull bottom to the surface. The deflectors enclose a sharp angle α with the horizontal centreline in a rearward direction. Preferably, the angle α of the air deflector at the bottom of the hull differs from the angle of the air deflector with the longitudinal direction along the sides of the vessel. The angles α and β depend on the air escape at the design speed.

In an alternative embodiment, the air deflector comprises a curved surface, extending substantially in a length direction of the vessel. Due to the acceleration of the water around the curved surface, a low pressure zone is formed, entrapping air bubbles that escape from the rearmost cavity. The air bubbles are guided from the air deflector towards the surface. By providing a V-shaped rear wall of the rearmost cavity with cavity walls sloping upward from the center line of the vessel towards the sides, an increased air transport is obtained.

A non-limiting embodiment of the air deflector according to the present invention will be explained in detail, by way of example, with reference to the accompanying drawings. In the drawings:
Fig. 1 shows a side view of a tanker or bulk carrier vessel comprising air cavities, and an air deflector according to the present invention,
Fig. 2 shows a bottom view of the vessel of Fig.1,
Fig. 3 shows a cross-sectional view of the air deflector along line III-III in Fig. 2,
Fig. 4 shows a side view of the curved surface air deflector, and
Fig. 5 shows a near view of the vessel of Fig. 4.

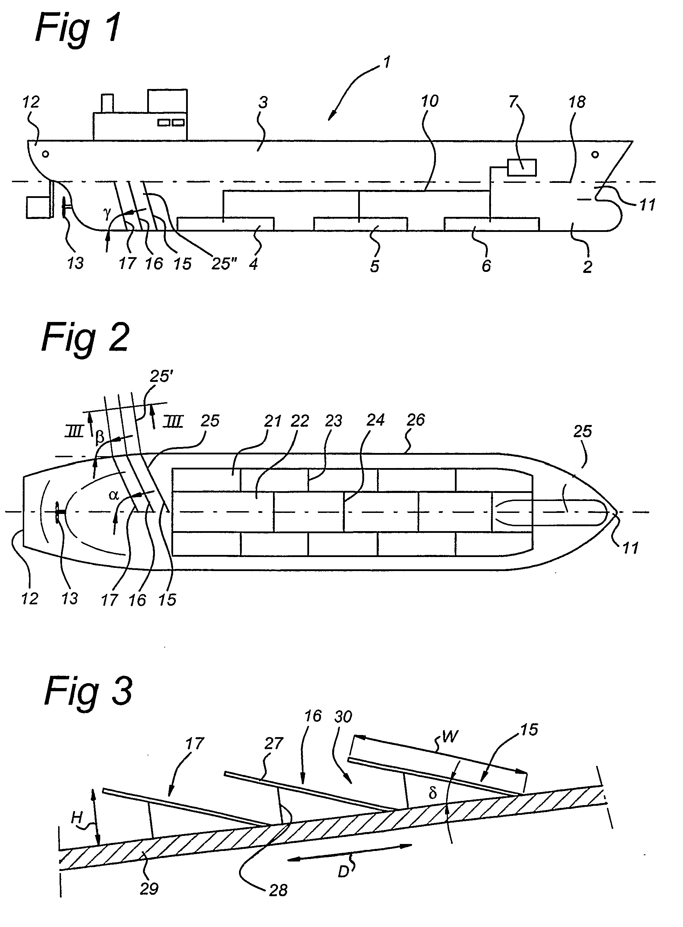

In Fig. 1 an oil tanker or bulk carrier 1 is shown, which may have a tonnage of for instance between 50.000 and 500.000 ton. At the bottom 2 of the hull 3, the vessel comprises a number of air cavities 4,5,6 which are open at their downward facing surfaces. Via a compressor 7, compressed air is injected into the cavities 4-6 via a series of ducts 10. Each cavity may have a length of about 0.5 - 30 m, a width of about 0.5 - 20 m and a depth of about 0.3 - 5 m. The height of the cavities is such that at maximum trim the cavities are still completely filled with air, and will in general correspond with the height of a computed wave crest inside the cavity. The width of the cavities is such that at least two rows of cavities extend in the length of the vessel, when seen in the width direction. The length Lc of the cavities of a slow sailing non-fin-stabilised monohull vessel at design speed v of the vessel may be given by Lc = 0.34 v².

The air is supplied at a pressure of 1.5 - 4 bar, and is slightly larger than the hydrostatic pressure in the cavity at the corresponding draught of the vessel. The rate of the air supply is such as to keep each cavity as dry as possible under the given conditions (speed, sea state. etc.), and will be trapped in a stable situation in each air cavity, excess air escaping from the rear parts of each cavity.

At the bow 11 the vessel 1 comprises a bulbous portion is provided, reducing water resistance, and at the stem 12, a submerged, non ventilated propeller 13 drives the vessel at speeds of between 8 and 30 knots. Near the stem 13, between the rearmost air cavity 4 and the propeller 13, three parallel air deflectors 15,16,17 extend along the outside surface of the hull, obliquely in a rearward direction at an angle γ with the horizontal, for guiding air escaping from the cavities 4-6, parallel to the deflectors, from the bottom 2 towards the water surface 18. This prevents air from entering into the propeller plane and keeps the air level at the propeller 13 lower than for instance 10% by volume. In this way, no special design modifications to the propeller need to be made, which is of advantage when the air cavities 4-6 are retrofitted onto an existing vessel.

As can be seen in Fig. 2, a number of air cavities 21, 22 extends at the bottom of the vessel, wherein the transverse partitions 23, 24 of the outer and inner cavities are offset in the direction of longitudinal centre line 25 for optimum wave shaping in the cavities. The transverse partitions 23,24 may be of wedge-shaped cross-section, the depth of each cavity gradually decreasing towards the rear of each cavity.

Between the rearmost cavities 21 and the propeller 13, the three wedge-shaped air deflectors 15, 16,17 extend at an acute angle α of for instance 80° - 110° with the longitudinal centre line 25, towards the tanging line 26, which is formed by the boundary of the substantially horizontal bottom part of the hull 1. In Fig. 2, the lower part 25 and intermediate part 27 of the air deflectors on only one side of the vessel are shown, while in actual fact the air deflector lay-out is symmetrical about the longitudinal centre line 18. From the tanging line 26, the air deflectors 15-17 extend with their intermediate parts 25' at an angle β with the longitudinal direction, along the sides of the hull, for instance up to water level 18. The angle β depends on the design speed of the vessel and the upward velocity of air bubbles in water. The upper parts 25" of the air deflectors 15-17 extends at an angle γ to the vertical, as can be seen in Fig. 1. The angles α, β and γ depend on the vessel design, such as the design speed and the air escape angle at the design speed and are laid out to guide the air bubbles to the surface without a transverse acceleration.

As can be seen from Fig. 3, the air deflectors 15-17 comprise a wedge shaped cross section, and are formed by a sloping strip 27 and a transverse strip 28, which are welded to the wall 29 of the hull 3. The width W of each strip may be 0.3 - 3 m while the height h of the rearmost part above the hull wall 29 is determined by the average amount of air escaping from the last cavity and may be 0.1 - 2 m, whereas the distance D between the deflectors may be 0.1 - 10 m and the angle δ with the hull wall 29 is 10° - 90°.

At the rear ends 30 of the air deflectors 15-17 a low-pressure zone is formed, in which air bubbles are trapped. The trapped air is guided in the low-pressure zone, along the deflectors, from the bottom 2 to the sea surface 18, such that air ingress into the zone of propeller 13 is prevented.

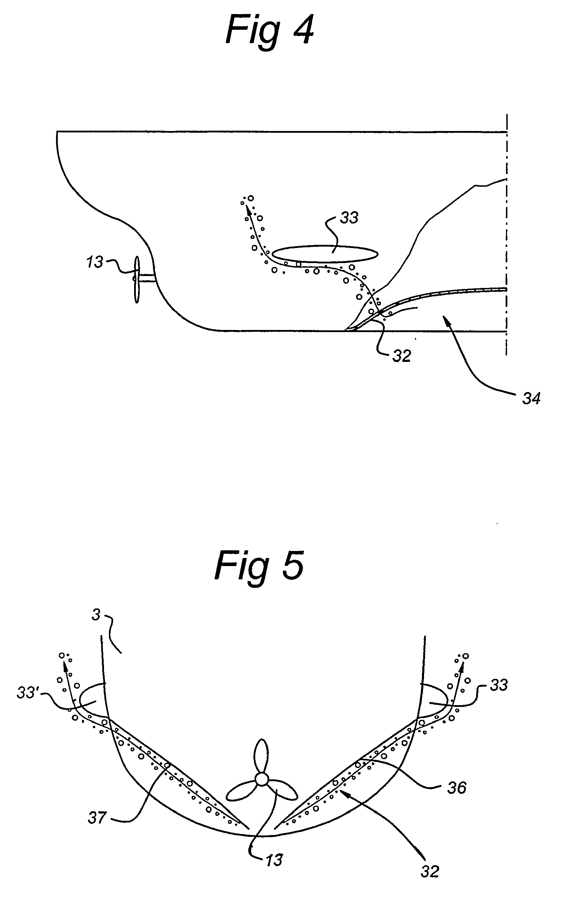

Fig. 4 shows an embodiment in which the air deflector comprises an elongated pontoon-like body 33 attached to the hull of the vessel. Air leaving the rearmost cavity 34 is guided along the rear wall 33 of said cavity towards the air deflector 33 and from thereon upwards towards the water surface. The curved shape of air deflector 33 cause an increase in water speed resulting in a low-pressure zone at the downstream end of air deflector 33 towards which the air bubbles are guided and from thereon upwards, before reaching the propeller 13. As can be seen in figure 5, the rearmost wall 32 of the rear air cavity 34 has V-shaped wall parts 36, 37 which slope upwards from the centre of the vessel towards the sides. The curved surfaces 33, 33' are shown to be directly attached to the hull 3 of the vessel.

## Claims

1. Air cavity vessel (1) comprising a hull (3) with a bow (11), a stem (12) and a propeller (13) near the stem, at least one open cavity (4,5,6) being formed at the bottom (2) of the hull, the cavity being bonded by a cavity wall (32) and air injection means (7, 10) for supplying air into the cavity, wherein the vessel is provided with at least one air deflector (15,16,17,33,33'), **characterised in that** the air deflector extends between the rearmost cavity (21,22,34) and the propeller (13), the air deflector projecting outwardly from the hull of the vessel outside of the cavity, closer to water level than the cavity wall.

2. Air cavity vessel according to claim 1, the deflector extending in a transverse direction from a longitudinal centre line (25) of the vessel to the sides of the vessel and having a sloping surface (27) extending from the hull (29) upwardly when going towards the stem (12).

3. Air cavity vessel (1) according to claim 2, wherein at least two deflectors (15,16,17) extend substantially in parallel at a predetermined mutual distance (D).

4. Air cavity vessel (1) according to claim 2 or 3, wherein the deflector (15,16,17) extends at a sharp angle (α) towards the stem.

5. Air cavity vessel (1) according to claim 4, wherein the deflector extends at a first angle with the longitudinal centre line (25), along the bottom (2) of the hull (3), and at a second angle (β) with the longitudinal direction, different from the first angle (α), along the substantially vertical sides of the hull (3).

6. Air cavity vessel (1) according to any of the preceding claims, wherein the deflector (15-17) extends to water level (18).

7. Air cavity vessel (1) according to any of the preceding claims, wherein the at least one air cavity comprises a front, rear and side boundaries which have been connected to the bottom of the hull.

8. Air cavity vessel (1) according to claim 7, the propeller (13) comprising a non-ventilated propeller.

9. Air cavity vessel (according to claim 1, the air deflector comprising a curved surface (33, 33') attached on each side of the hull.

10. Air cavity vessel (1) according to claim 9, the curved surface being formed by a closed body (33, 33') attached to the hull (3).

11. Air cavity vessel (1) according to any of the preceding claims, the rearmost cavity (34) having a rear wall (32) with two upwardly sloping wall parts (36, 37) when going from the centre line of the vessel towards the sides.

## Patentansprüche

1. Schiff (1) mit Lufthohlraum, das einen Rumpf (3) mit einem Bug (11), einem Heck (12) und einem Propeller (13) nahe an dem Heck, wenigstens einen offenen Hohlraum (4, 5, 6), der am Boden (2) des Rumpfes ausgebildet ist, wobei der Hohlraum durch eine Hohlraumwand (32) begrenzt wird, sowie eine Lufteinblaseinrichtung (7, 10) zum Zuführen von Luft in den Hohlraum umfasst, wobei das Schiff mit wenigstens einer Luftablenkeinrichtung (15, 16, 17, 33, 33') versehen ist, **dadurch gekennzeichnet, dass** sich die Luftablenkeinrichtung zwischen dem hintersten Hohlraum (21, 22, 34) und dem Propeller (13) erstreckt und die Luftablenkeinrichtung außerhalb des Hohlraums von dem Rumpf des Schiffes näher zur Wasserlinie als die Hohlraumwand nach außen vorsteht.

2. Schiff mit Lufthohlraum nach Anspruch 1, wobei sich die Ablenkeinrichtung in einer Querrichtung von einer Längsmittellinie (25) des Schiffs zu den Seiten des Schiffs erstreckt und eine geneigte Fläche (27) aufweist, die sich von dem Rumpf (29) auf dem Weg zu dem Heck (12) hin nach oben erstreckt.

3. Schiff (1) mit Lufthohlraum nach Anspruch 2, wobei sich wenigstens zwei Ablenkeinrichtungen (15, 16, 17) im Wesentlichen parallel in einem vorgegebenen Abstand (D) zueinander erstrecken.

4. Schiff (1) mit Lufthohlraum nach Anspruch 2 oder 3, wobei sich die Ablenkeinrichtung (15, 16, 17) in einem spitzen Winkel (α) auf das Heck zu erstreckt.

5. Schiff (1) mit Lufthohlraum nach Anspruch 4, wobei sich die Ablenkeinrichtung in einem ersten Winkel zu der Längsmittellinie (25) am Boden (2) des Rumpfes (3) entlang und in einem zweiten Winkel (β) zu der Längsrichtung, der sich von dem ersten Winkel (α) unterscheidet, an den im Wesentlichen vertikalen Seiten des Rumpfes (3) entlang erstreckt.

6. Schiff (1) mit Lufthohlraum nach einem der vorangehenden Ansprüche, wobei sich die Ablenkeinrichtung (15-17) zur Wasserlinie (18) erstreckt.

7. Schiff (1) mit Lufthohlraum nach einem der vorangehenden Ansprüche, wobei der wenigstens eine Lufthohlraum eine vordere, eine hintere und seitliche Grenzen umfasst, die mit dem Boden des Rumpfes verbunden sind.

8. Schiff (1) mit Lufthohlraum nach Anspruch 7, wobei der Propeller einen unbelüfteten Propeller umfasst.

9. Schiff (1) mit Lufthohlraum nach Anspruch 1, wobei die Luftablenkeinrichtung eine gekrümmte Fläche (33, 33') umfasst, die an jeder Seite des Rumpfes angebracht ist.

10. Schiff (1) mit Lufthohlraum nach Anspruch 9, wobei die gekrümmte Fläche durch einen geschlossenen Körper (33, 33') gebildet wird, der an dem Rumpf (3) angebracht ist.

11. Schiff (1) mit Lufthohlraum nach einem der vorangehenden Ansprüche, wobei der hinterste Hohlraum (34) eine hintere Wand (32) mit zwei Wandteilen (36, 37) hat, die auf dem Weg von der Mittellinie des Schiffs zu den Seiten hin nach oben geneigt sind.

## Revendications

1. Navire à cavité d'air (1) comportant une coque (3) avec une proue (11), une poupe (12) et une hélice (13) près de la poupe, au moins une cavité ouverte (4, 5, 6) étant formée au niveau du fond (2) de la coque, la cavité étant délimitée par une paroi de cavité (32) et des moyens d'injection d'air (7, 10) destinés à délivrer de l'air dans la cavité, le navire étant pourvu d'au moins un déflecteur (15, 16, 17, 33, 33'), **caractérisé en ce que** le déflecteur d'air s'étend entre la cavité la plus en arrière (21, 22, 34) et l'hélice (13), le déflecteur dépassant vers l'extérieur de la coque du navire à l'extérieur de la cavité, plus près du niveau d'eau que la paroi de cavité.

2. Navire à cavité d'air (1) selon la revendication 1, le déflecteur s'étendant dans une direction transversale depuis un axe longitudinal (25) du navire jusqu'aux côtés du navire et ayant une surface inclinée (27) s'étendant depuis la coque (29) vers le haut en allant vers la poupe (12).

3. Navire à cavité d'air (1) selon la revendication 2, dans lequel au moins deux déflecteurs (15, 16, 17) s'étendent sensiblement en parallèle à une distance mutuelle prédéterminée(D).

4. Navire à cavité d'air (1) selon la revendication 2 ou 3, dans lequel le déflecteur (15, 16, 17) s'étend avec un angle aigu (α) vers la poupe.

5. Navire à cavité d'air (1) selon la revendication 4, dans lequel le déflecteur s'étend avec un premier angle avec l'axe longitudinal (25), le long du fond (2) de la coque (3), et avec un deuxième angle (β) avec la direction longitudinale, différent du premier angle (α), le long des côtés sensiblement verticaux de la coque (3).

6. Navire à cavité d'air (1) selon l'une quelconque des revendications précédentes, dans lequel le déflecteur (15 à 17) s'étend jusqu'à la ligne de flottaison (18).

7. Navire à cavité d'air (1) selon l'une quelconque des revendications précédentes, dans lequel la au moins une cavité d'air comprend des limites avant, arrière et latérales qui ont été reliées au fond de la coque.

8. Navire à cavité d'air (1) selon la revendication 7, l'hélice (13) comportant une hélice non ventilée.

9. Navire à cavité d'air (1) selon la revendication 1, le déflecteur d'air comportant une surface courbe (33, 33') fixée sur chaque côté de la coque.

10. Navire à cavité d'air (1) selon la revendication 9, la surface courbe étant formée par un corps fermé (33, 33') fixé sur la coque (3).

11. Navire à cavité d'air (1) selon l'une quelconque des revendications précédentes, la cavité la plus en arrière (34) ayant une paroi arrière (32) avec deux parties de paroi inclinées vers le haut (36, 37) en allant de l'axe du navire vers les côtés.
